# EUROPÄISCHE PATENTANMELDUNG

(11) **EP 0 867 226 A2**
(43) Veröffentlichungstag der Anmeldung: **30.09.1998**
(21) Anmeldenummer: 97121429.1
(22) Anmeldetag: 05.12.1997
(51) Int. Cl.: B04B 9/04, H02K 7/08

(54) **Laborzentrifuge mit Elektromotor**

(30) Priorität: 29.03.1997 DE 19713269
(71) Anmelder: EPPENDORF-NETHELER-HINZ GMBH, D-22339 Hamburg (DE)
(72) Erfinder: Scheuber, Joachim, 22339 Hamburg (DE); Koeppel, Jürgen, 22927 Grosshansdorf (DE); Beese, Jochen, 22851 Norderstedt (DE); Kleemann, Rolf, 23869 Elmenhorst (DE)
(74) Vertreter: Schaefer, Konrad, Dipl.-Phys.

(57) **Zusammenfassung**

Eine Laborzentrifuge mit einem mittels einer Lagerung um eine Drehachse drehbar an einem Stator gelagerten Rotor und einem den Rotor treibenden Elektromotor, der einen am Stator befestigten Standteil Pole und einen direkt am Rotor befestigten Drehteil aufweist, wobei der Standteil mit Erregerspulen versehene Pole aufweist, die durch eine Spaltfläche magnetisch in den Drehteil greifen, ist dadurch gekennzeichnet, daß die Spaltfläche senkrecht oder flach konisch zur Drehachse angeordnet ist.

## Beschreibung

Die Erfindung betrifft eine Zentrifuge der im Oberbegriff des Anspruches 1 genannten Art.

Eine solche Zentrifuge ist aus der US-A-5,505,684 bekannt. Bei der dort gezeigten Konstruktion ist der Drehteil des Motors direkt am Rotor befestigt, also nicht über eine Zwischenwelle wie bei älteren bekannten Konstruktionen. Daraus ergibt sich eine sehr kompakte Konstruktion, die gut geeignet ist für insbesondere kleine Laborzentrifugen.

Bei der bekannten Konstruktion ist der Standteil des Elektromotors radial innerhalb des Rotors angeordnet. Es ergibt sich damit die konventionelle Motorbauweise mit zylindrischer Spaltfläche konzentrisch zur Drehachse, die hier aber erhebliche Nachteile aufweist.

Soll für guten Wirkungsgrad des Motors der Spät eng sein, so können aufgrund von Unwuchten entstehende Vibrationen des Rotors gegenüber dem Stator nicht zugelassen werden. Die bekannt Konstruktion sieht daher eine starr mit dem Stator verbundene Lagerung vor. Alle erzeugten Schwingungen werden auf den Stator übertragen. Möglichkeiten zur schwingungsdämpfenden Abfederung innerhalb der Zentrifuge bietet diese Konstruktionsweise nicht.

Ferner ist der gesamte Elektromotor konzentrisch vom Rotor umgeben. Dies führt zu thermischen Problemen. Bei längerer und höherer Motorbelastung kann die innerhalb des Rotors entstehende Wärme im wesentlichen nur durch den Rotor abgeführt werden. Im Rotor vorgesehene, zu zentrifugierende Proben werden erwärmt, was in den meisten Fällen nicht zulässig ist.

Die konventionelle Motoranordnung mit zylindrischer Spaltfläche ergibt zudem in dem zur Verfügung stehenden Raum innerhalb des Rotors wesentliche konstruktive Beschränkungen für den Elektromotor. So müssen die Spulen in aufwendiger Weise auf die Pole gewickelt werden. Außerdem nimmt radial nach innen der für Pole und Spulen zur Verfügung stehende Platz schnell ab, so daß erhebliche räumliche Anordnungsprobleme und Dimensionierungsprobleme entstehen, die eine Beschränkung der Motorleistung und thermische Probleme mit sich bringen. Daraus resultiert auch, daß nur Elektromotorbauarten verwendbar sind, die einen hohen Wirkungsgrad haben, dadurch aber auch aufwendig und teuer sind.

Die Aufgabe der vorliegenden Erfindung besteht darin, eine Zentrifuge der eingangs genannten Art zu schaffen, die bei sehr kostengünstiger Konstruktion die Wärmebeeinflussung der zu zentrifugierenden Proben verrigert.

Dies Aufgabe wird erfindungsgemäß mit den Merkmalen des Anspruches 1 gelöst.

Bei der erfindungsgemäßen Konstruktion ist der Elektromotor in Flachbauweise ausgeführt, also mit einer Spaltfläche, die im wesentlichen senkrecht zur Drehachse steht, d.h. genau senkrecht oder in einem flachen Winkel als flache Konusfläche. Der Drehteil und der Standteil des Elektromotors liegen sich als im wesentlichen scheibenförmige Bauteile an der Spaltfläche gegenüber, wobei, wie bei Elektromotoren allgemein erforderlich, die von den Polen erzeugten Magnetfelder die Spaltfläche im wesentlichen senkrecht durchgreifen.

Bei dieser Bauweise kann der Rotor auf einer Seite der Spaltfläche auf dem Drehteil des Motors angeordnet werden, ohne auf die Motorkonstruktion Rücksicht nehmen zu müssen. Insbesondere ist aber dabei auch der Motor nicht wie bei der bekannten Konstruktion duch den umgebenden Rotor beengt. Er kann mit sehr großem Durchmesser aufgebaut werden, wodurch sich bei einfacher Bauweise hohe Drehmomente und Leistungen erzeugen lassen.

Der am Umfang nach außen offene Spalt und die großflächige Bauweise des Motors ergeben eine sehr geringe Wärmeerzeugung und Wärmeübertragung auf den Rotor und somit eine sehr geringe Wärmebeeinflussung der zu zentrifugierenden Proben.

Die im wesentlichen senkrecht zur Drehachse liegende Spaltfläche erlaubt ferner Schwingungen des Rotors gegenüber dem Stator, die in der Regel senkrecht zur Drehachse auftreten, also in Richtung der Spaltfläche, und die ohne weiteres auch bei engem Spalt tolerierbar sind, ohne daß es zu Berührungen im Spalt kommt.

Vorteilhaft sind die Merkmale des Anspruches 2 vorgesehen. Ein solches Federelement kann beispielsweise mit Blattfedern derart ausgebildet sein, daß es nur Bewegungen des Rotors senkrecht zur Drehachse (also Parallelverschiebungen der Drehachse) zuläßt, Kippbewegungen, die zu Spaltberührungen führen könnten, aber wirkungsvoll unterdrückt. Dadurch wird das insbesondere beim Hochfahren der Zentrifuge durch kritische Drehzahlbereiche auftretende Vibrieren des Stators, das die gesamte Zentrifuge zum Springen und Wandern quer über den Labortisch bringen kann, wirkungsvoll vermieden.

Vorteilhaft sind die Merkmale des Anspruches 3 vorgesehen. Hierdurch erzeugen die Pole in optimaler Weise Magnetlinien, die die Spaltfläche senkrecht durchlaufen, und es ergibt sich insbesondere eine herstellungstechnisch einfache Bauweise, bei der die Bestückung der Pole mit den Spulen wie auch das Zusammensetzen der meisten anderen Zentrifugenteile in Richtung der Drehachse erfolgen kann.

Vorteilhaft sind dabei die Merkmale des Anspruches 4 vorgesehen. Die Spulen können zusammen mit den übrigen elektronischen Bauteilen zur Motorsteurung auf einer Platine befestigt sein, die mit den Durchlässen in Richtung der Drehachse über die Pole gesteckt wird. Dadurch ergeben sich erhebliche Einsparungen bei den Produktionskosten, die durch die Bauweise nach Anspruch 1 ermöglicht sind.

Vorteilhaft sind die Merkmale des Anspruches 5 vorgesehen. Durch die großflächige, nach Anspruch 1 ermöglichte Bauweise des Motors läßt sich dieses stark kostensparende Motorprinzip mit geringem Wirkungsgrad einsetzen, das zu einer wesentlichen baulichen Vereinfachung führt. Der Drehteil des Elektromotors kann als einfaches Blech geeigneten Zuschnittes auf einfache Weise beispielsweise durch Verkleben am Boden des Rotors befestigt sein.

Dabei sind vorteilhaft die Merkmale des Anspruches 6 vorgesehen. Durch die unsymmetrische Ausbildung des Drehteiles läßt sich beim Einschalten des Motors ein Anfahren stets in derselben Drehrichtung erreichen. Aufwendige Anfahrsteuerungen zur Erzielung desselben Effektes werden vermeiden.

Vorteilhaft sind die Merkmale des Anspruches 7 vorgesehen. Hierdurch ergibt sich eine einfach herstellbare Polkonstruktion mit durch die Unterteilung in aneinanderliegende Blechlagen verringerten Wirbelstromverlusten, wodurch die Wärmeerzeugung in vorteilhafter Weise erhablich verrignert wird.

Vorteilhaft sind die Merkmale des Anspruches 8 vorgesehen. Auf diese Weise lassen sich die Pole des Elektromotors als Hilfsantrieb verwenden, mit dem über das Treibglied eine Betätigung erfolgen kann, beispielsweise die Betätigung einer Deckelverriegelung für den Deckel der Zentrifuge, der während des Betriebes aus Sicherheitsgründen gesperrt sein muß.

Vorteilhaft sind dabei die Merkmale des Anspruches 9 vorgesehen, wodurch sich eine erhöhte Sicherheit beispielsweise bei der Verwendung zur Deckelverriegelung ergibt, da nur bei gleichzeitigem Einschalten der beiden benachbarten Pole das Treibglied bewegt wird, was während des Motorbetriebes mit alternierend betriebenen Polen nicht geschehen kann. Es ist also sichergestellt, daß das Treibglied nur bei abgeschaltetem Motor in einer Sonderbetriebsart der Pole betätigbar ist.

In den Zeichnungen ist die Erfindung beispielsweise und schematisch dargestellt. Es zeigen:
- Fig. 1: einen Achsschnitt durch eine erfindungsgemäße Zentrifuge gemäß Linie 1-1 in Fing. 2 und
- Fig. 2: einen Schnitt durch die Spaltfläche nach Linie 2-2 in Fig. 1.

Die dargestellte Zentrifuge weist einen Rotor 1 auf, der nur sehr schematisch dargestellt ist. Er kann beispielsweise als massiver Formkörper in der dargestellten Form ausgebildet sein. Der Rotor 1 weist zu einer von oben zugänglichen Vertiefung hin offene, schräg nach außen unten gerichtete Aufnahmen 2 für zu zentrifugierende Proben auf.

Der Rotor 1 ist auf einer Welle 3 befestigt, die über eine Lagerung 4 und ein Federelement 5 mit dem Stator 6 der Zentrifuge verbunden ist.

Ein die gesamte dargestellt Konstruktion aus Sicherheitsgründen umgebendes Gehäuse ist zur zeichnerischen Vereinfachung nicht dargestellt.

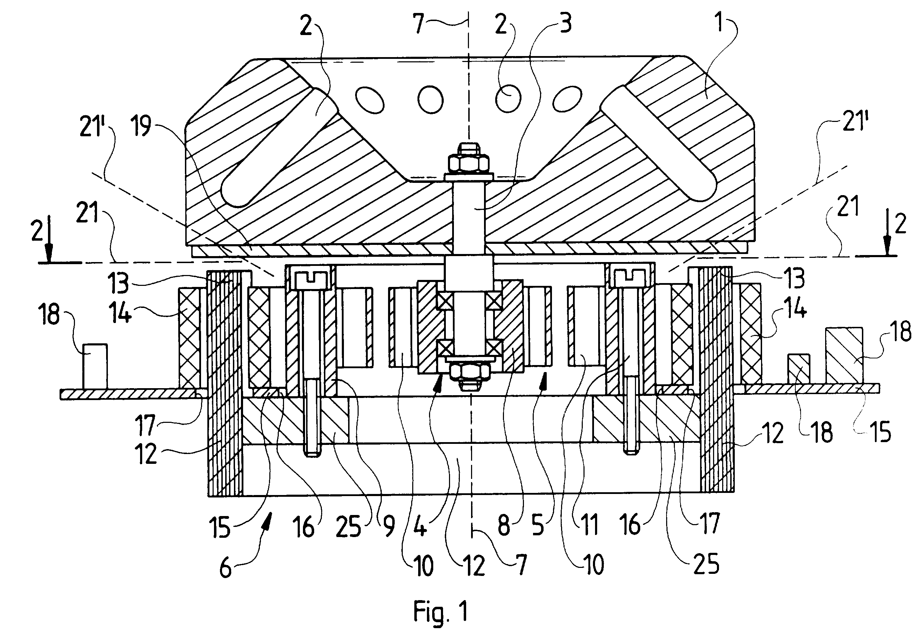

In der Lagerung 4 ist, wie Fig. 1 zeigt, die Welle 3, die in der Drehachse 7 der Zentrifuge angeordnet ist, in zwei in axialem Abstand angeordneten Lagern gehalten und diesen gegenüber, wie Fig. 1 zeigt, in radialer Richtung abgestützt. Die beiden Lage (in üblicher Weise im Schnitt mit einem Kreuz gekennzeichnet) sind außen in einem Innenring 8 des Federelementes 5 gehalten.

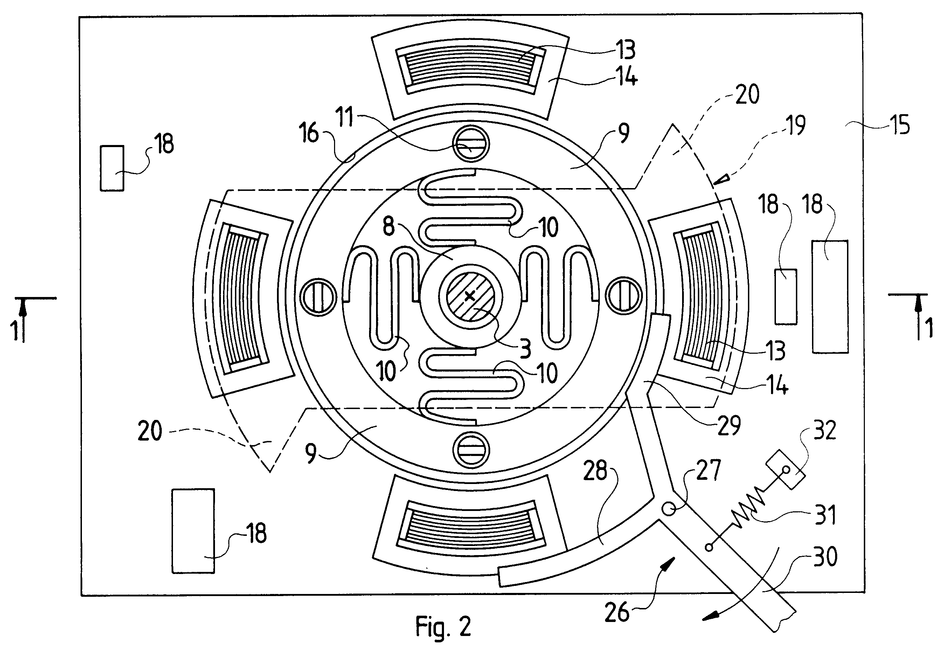

Das Federelement 5 weist einen Außenring 9 auf, gegen den der Innenring 8, wie die Draufsicht der Fig. 2 zeigt, mit vier S-förmig gebogenen Blattfedern 10 abgestützt ist. Die Blattfedern 10 sind in ihrem aus Fig. 1 ersichtlichen Querschnitt dünn, aber sehr hoch in Richtung der Drehachse 7 ausgebildet, lassen also Parallelbewegungen der Welle 3 zur Drehachse 7 zu und unterdrücken Kippbewegungen sehr wirkungsvoll. Mit ihrem Außenring 9 ist das Federelement 5 auf dem Stator 6 abgestützt und an diesem mittels der dargestellten Schrauben 11 befestigt.

Der Stator 6 weist einen konzentrisch zur Drehachse 7 angeordneten Ringkern 12 auf, der in seinem oberen Bereich bis etwa zur Hälfte seiner Höhe eingefräst ist unter Ausbildung von vier vom Ringkern 12 aufragenden Polen 13, die mit diesein integral ausgebildet sind. Der Ringkern 12 mit den Polen 13 ist aus magnetisch hoch permeablem Blech gewickelt zur Vermeidung von Wirbelströmen. Er bildet den Rückschluß zwischen den einzelnen Polen 13. Jeder Pol 13 ist von einen Spule 14 umgeben.

Im Inneren des Ringkernes 12 ist ein Stützring 25 befestigt, der den Außenring 9 des Federelementes 5 trägt und an dem die Schrauben 11 angreifen.

Die Spulen 14 sind auf einer Platine 15 angeordnet, die mit einem inneren Ausschnitt 16 das Federelement 5 umgreift und mit Durchlässen 17 die Pole 13 umgibt. Die Platine 15 kann auf einfache Weise, wie in Fig. 1 dargestellt, am Stator 6 gelagert und alt diesem mit nicht dargestellten Mitteln, beispielsweise durch Verklebung befestigt sein.

Die Pole 13 des Stators 6 stehen parallel zur Drehachse 7, also senkrecht zum Bodenteil 12 des Stators. Auch die Spulen 14 stehen mit ihrer Achse in dieser Richtung. Die Platine kann mit den Spulen 14 und weiteren Bauelementen 18 der Motorelektronik bestückt und vorgefertigt werden. Sie kann sodann in Richtung der Drehachse 7 auf die Pole gesetzt werden.

Bei der dargestellten Zentrifuge ist der Elektromotor als Reluktanzmotor ausgebildet. Sein Drehteil ist als Blech 19 aus magnetisch hochpermeablem Material ausgebildet. Das Blech kann, wie Fig. 1 zeigt, auf der Unterseite des Rotors 1 beispielsweise durch Verklebung befestigt sein. Es ist so auszubilden, daß es stets zwei Pole 13 übergreift, wie Fig. 2 mit gestrichelter Darstellung des Bleches 19 zeigt. Die Motorelektronik schaltet bei der in Fig. 2 dargestellten Bauweise mit vier Polen 13 stets von zwei gegenüberliegenden Polen auf zwei um 90° versetzt gegenüberliegende Pole um, wodurch das Blech 19 gedreht wird.

Wie Fig. 2 zeigt, sind die gegenüberliegenden Pole des Bleches 19 asymmetrisch mit seitlichen Ecken 20 ausgebildet. Diese ergeben eine unsymmetrische Magnetkopplung mit den Polen, die beim Einschalten des Motors für Anlaufen stets in derselben Richtung sorgt.

Wie aus Fig. 1 ersichtlich, ist das Blech 19, das den Drehteil des Elektromotors bildet, flach in einer Ebene senkrecht zur Drehachse 7 angeordnet. Es steht im Abstand eines Spaltes, der mit der gestrichelten Linie 21 bezeichnet ist, gegenüber dem Stator 6 und dem am Stator befestigten Standteil des Motors, also den Polen 13 und Spulen 14.

In dem in Fig. 1 dargestellten Beispiel steht der Spalt 21 exakt senkrecht zur Drehachse 7. Er kann jedoch - bei entsprechender formgebung der den Spät bildenden rotierenden und stehenden Teile - auch in flachem Winkel, wie mit den Linien 21' angedeutet, trichterförmig gerichtet sein, entweder so wie in Fig. 1 dargestellt als nach oben offener Trichter oder als nach unten offener Trichter. Auch bei Ausbildung der Spaltfläche 21' in konischer Form läßt der Spalt noch größer seitlich Schwingungen des Motors gegenüber dm Stator zu, ohne daß es zu Berührungen im Spalt kommt. Ferner kann der Spalt auch in seinem radialen Verlauf stufenförmig ausgebildet sein, also z. B. in seinem radial innen liegenden Bereich höher liegen, um dort mehr Platz für die Lagerung zu schaffen.

Diedargestellt Kontruktion ist auch dann im wesentlichen umempfindlich gegen Berührungen durch Kippschwingungen, wenn diese vom Federelement 5 nicht restlos unterdrückt werden können. Es kommt dann zu Berührungen zwischen den drehenden und den stehen Teilen. Wie Fig. 1 zeigt, kann dabei das Blech 19 beispielsweise gegen die Oberseite des Außenringes 9 des Federelementes 5 in Anlage kommen. Solche Berührungen sind unschädlich. Die in Frage kommenden Anlageflächen können mit nicht dargestellten Gleitringen belegt werden, die auch extreme Kippschwingungen zerstörungsfrei abfangen.

Wie Figur 2 zeigt, kann die Zentrifuge mit einem Zusatzantrieb ausgerüstet sein, der zur Erzeugung der Antriebskraft die ohnehin vorhandenen Pole 13 des Elektromotors verwendet. Dies ist in Figur 2 dargestellt.

Ein Y-Hebel 26 ist auf einer Achse 27, die parallel zur Drehachse 7 steht und die beispielsweise auf der Platine 15 befestigt sein kann, drehbar gelarert. Er greift mit zwei Armen 28 und 29 in die Nähe zweier benachbarter Pole 13. Ein dritter Arm 30 ist über eine Feder 31, die bei 32 ortsfest gehalten ist, vorgespannt.

Wenn von der z.B. auf der Platine 15 angeordneten Motorelektronik die beiden benachbarten Pole 13 des Elektromotors, an denen die Arme 28 und 29 des Y-Hebels 26 benachbart liegen, gleichzeitig eingeschaltet sind, reicht die auf den Y-Hebel 26 einwirkende Anziehungskraft aus, um die Kraft der Feder 31 zu überwinden. Der Arm 30 wird um ein Stück in Richtung des Uhrzeigersinnes gedreht und kann an seinem freien, abgebrochen dargestellten Ende eine Betätigung ausführen, beispielsweise den Zentrifugendeckel verriegeln oder Entriegeln.

Währen des Betriebes des Elektromotors zum Antrieb der Zentrifuge werden die Pole stets alternierend betrieben. Es wird dann immer nur einer der mit dem Y-Hebel 26 zusammenarbeitenden Pole strombeaufschlagt. Dabei kann die Rückstellkraft der Feder 31 aber nicht überwunden werden. Nur bei Stillstand der Zentrifuge, wenn der normale Motorbetrieb abgeschaltet ist, kann in einer Sonderbetriebsart eine gleichzeitige Erregung der beiden benachbarten, auf den Y-Hebel 26 einwirkenden Pole erfolgen.

In einfacherer Ausbildung kann auch einer der Arme 28, 29 weggelassen werden, so dar eine Betätigung, z.B. eine Dauerbetätigung zum Verriegeln, bei entsprechend träger Ausbildung des Hebels während des normalen Motorbetriebes erfolgt.

## Patentansprüche

1. Laborzentrifuge mit einem mittels einer Lagerung (4) um eine Drehachse (7) drehbar an einem Stator (6) gelagerten Rotor (1) und einem den Rotor treibenden Elektromotor der einen am Stator befestigten Standteil Pole (13) und einen direkt am Rotor befestigten Drehteil (Blech 19) aufweist, wobei der Standteil mit Erregerspulen (Spulen 14) versehene Pole (13) aufweist, die durch eine Spaltfläche (21, 21') magnetisch in den Drehteil greifen, **dadurch gekennzeichnet,** daß die Spaltfläche senkrecht (21) oder flach konisch (21') zur Drehachse (7) angeordnet ist.

2. Zentrifuge nach Anspruch 1, **dadurch gekennzeichnet,** daß die Lagerung (4) über ein Federelement (5) am Stator (6) befestigt ist, das nur Bewegutigen im wesentlichen senkrecht zur Drehachse (7) zuläßt.

3. Zentrifuge nach Anspruch 1, **dadurch gekennzeichnet,** daß die Pole (13) des Standteiles und die Spulen (14) mit ihren Achsen im wesentlichen parallel zur Drehachse (7) stehen.

4. Zentrifuge nach Anspruch 3, **dadurch gekennzeichnet,** daß die Spulen (14) auf einer gemeinsamen, im wesentlichen senkrecht zur Drehachse (7) angeordneten Platine (15) befestigt sind, die Durchlässe (17) für die Pole (13) aufweist.

5. Zentrifuge nach Anspruch 1, **dadurch gekennzeichnet,** daß der Elektromotor als Reluktanzmotor ausgebildet ist mit einein Drehteil (Blech 19), der zwei Pole (13) des Standteiles überfaßt und aus magnetisch hochpermeablem Blech ausgebildet ist.

6. Zentrifuge nach Anspruch 5, **dadurch gekennzeichnet,** daß der Drehteil (Blech 19) an seinen die Pole (13) überfassenden radialen Enden asymmetrisch (Ecken 20) geformt ist.

7. Zentrifuge nach Anspruch 1, **dadurch gekennzeichnet,** daß die Pole (13) als integrale Vorsprünge eines aus permeablem Blech gewickelten Ringkernes (12) ausgebildet sind.

8. Zentrifuge nach Anspruch 1, **dadurch gekennzeichnet,** daß ein magnetisch bewegbares Treibglied (Y-Hebel 26) in der Nähe eines der Pole (13) in Betätigungsrichtung bewegbar gelagert ist.

9. Zentrifuge nach Anspruch 8, **dadurch gekennzeichnet,** daß das Treibglied (Y-Hebel 26) mit Teilbereichen (Arme 28, 29) auch in de Nähe eines benachbarten Poles (13) liegt, wobei das Treibglied bei magnetischer Beaufschlagung beider Pole (13) gegen eine nur bei gleichzeitiger Beaufschlagung beider Pole überwindbare Rückzugfeder (31) die Entriegelung bewirkt.
